# EUROPÄISCHE PATENTSCHRIFT

(11) **EP 2 127 516 B1**
(45) Veröffentlichungstag und Bekanntmachung des Hinweises auf die Patenterteilung: **25.01.2012**
(21) Anmeldenummer: 08009592.0
(22) Anmeldetag: 27.05.2008
(51) Int. Cl.: A01F 25/20

(54) **Vorrichtung zum Entnehmen von Silagegut aus einem Silo**
Device for removing silage from a silo
Dispositif destiné à extraire des marchandises d'ensilage d'un silo

(43) Veröffentlichungstag der Anmeldung: 02.12.2009
(73) Patentinhaber: Bernard van Lengerich Maschinenfabrik GmbH & Co. KG, 48488 Emsbüren (DE)
(72) Erfinder: Eichler, Stefan, 63768 Hösbach Rottenberg (DE); van Lengerich, Wilhelm, 48488 Emsbüren (DE)
(74) Vertreter: Pott, Ulrich

(56) Entgegenhaltungen:
- EP-A- 0 612 465
- DE-A1- 3 540 862
- GB-A- 2 438 064

## Beschreibung

Die Erfindung bezieht sich auf eine Vorrichtung zum Entnehmen von Silagegut aus einem Silo, insbesondere einem Flach- oder Fahrsilo, mit einer einem Aufnahmebehälter zugeordneten Aufnahmevorrichtung, die zumindest eine eine Förderronde aufweisende Förderschnecke hat, die das aufgenommene Silagegut zum Weitertransport in den Aufnahmebehälter einem Weiterförderer zufördert.

Vorrichtungen der vorgenannten Art sind als gezogene oder selbstfahrende Futtermischwagen bekannt, die in herkömmlicher Ausbildung Messerklingen zum Abfräsen des Silagegutes aufweist. Diese Messerklingen sind versetzt mit Abstand zueinander auf der Förderronde montiert, so dass sie das Silagegut in der gewünschten Schnittgröße aus einem Silo, beispielsweise einem Flach- und Fahrsilo oder einem Silageballen entnehmen können. Das ausgeschnittene Silagegut wird üblicherweise über ein Förderband von oben in einen fahrzeugseitigen Aufnahmebehälter gegeben und kann durch ein Abförderband in einen Futtergang ausgebracht werden.

Nachteilig ist, dass durch das Zerschneiden des Silagegutes eine Strukturveränderung des Silagegutes vorgenommen wird mit einer Zerstörung von Futterressourcen. Desgleichen ist es erschwert, z.B. Zuschlagstoffe wie Stroh oder Kraftfutterpelletts zuzugeben, da diese durch die Förderschnecke mit ihren Schneid- bzw. Zerkleinerungs- oder Fräswerkzeugen feinstäubig zerschlagen werden. Darüber hinaus neigen die Aufnahmevorrichtungen der vorbekannten Vorrichtungen zu einer Vermusung, was die Entnahmeleistung der Vorrichtungen insgesamt schmälert und nochmals die Futterqualität negativ beeinflusst.

Aus der GB 2438064 A ist eine Vorrichtung zum Entnehmen von Silagegut bekannt, bei der auf einer Förderwalze verteilt Schneidelemente in Gestalt von Schneidzinken vorgesehen sind, mit denen Silagegut aus einem Silagevorrat geschnitten herauszunehmen ist. Eine ähnliche Vorrichtung ist auch aus der DE 35 40 862 A1 bekannt, bei der eine erste und eine zweite Zinkenwalze vorgesehen sind, um das Silagegut geschnitten aus einem Silagegutvorrat zu entnehmen.

Beiden vorbekannten Vorrichtungen ist gemeinsam nachteilig, dass durch das Zerschneiden des Silagegutes die vorbeschriebene Strukturveränderung des Silagegutes vorgenommen wird.

Es ist daher Aufgabe der vorliegenden Erfindung, eine Vorrichtung zum Entnehmen von Silagegut der eingangs genannten Art derart weiterzubilden, dass eine Strukturveränderung des zu entnehmenden Silagegutes weitestgehend vermieden ist.

Zur Lösung dieser Aufgabe ist bei der Vorrichtung zum Entnehmen von Silagegut der eingangs genannten Art vorzusehen, dass die Förderschnecke eine als Ausräumer ausgebildete Förderronde aufweist mit zumindest einem in Längsrichtung der Förderronde vorgesehenen Förderrondensegmentbereich und einen sich daran anschließenden Bereich der Räumfinger zum Eintauchen in das Silagegut aufweist, zwischen denen jeweils ein Zwischenraum ausgebildet ist, wobei der Innendurchmesser der Förderschnecke, das ist der Mantelflächendurchmesser, 40 % bis 70 % des Außendurchmessers der Förderschnecke beträgt und wobei die Räumfinger in ihrem in Umlaufrichtung hinteren Stirnkantenbereich geneigt ausgebildet sind und ihre einen Fußbereich 5.9 gegenüberliegende Raumfingerkopfkante jeweils eine geringere Längserstreckung haben als ihr in den Förderrondensegmentbereich übergehender Fußbereich.

Durch das vorgeschlagene Durchmesserverhältnis ist so viel Freiraum zwischen den Förderronden zur Verfügung gestellt, dass das Fördergut sicher weiterzufördern ist, ohne dass es zerstört wird. Dies gilt auch für langfaseriges Gutmaterial. Durch die besondere Gestaltung der Räumfinger ist sichergestellt, dass das Silagegut nur herausgerissen und nicht beispielsweise geschnitten wird.

Damit ist eine Vorrichtung zum Entnehmen von Silagegut aus einem Silo zur Verfügung gestellt, mit dessen Aufnahmevorrichtung Silagegutmaterial ohne dessen Zerstörung und damit einhergehender Materialstrukturveränderung außerordentlich schonend entnommen und der Aufnahmevorrichtung, beispielsweise einem Aufnahmebehälter, zuzuführen ist. Dazu wird über die Räumfinger Silagegutmaterial aus einem Flachsilo oder aus einem Silageballen herausgezogen, so daß dieses nicht abgeschnitten oder abgefräst wird.

Die Räumfinger sind mit entsprechender Neigung zur Vertikalen an den Förderrondensegmentbereich montiert. Dabei ist ein Neigungswinkel zur Vertikalen von 5° bis 15°, beispielsweise 12°, bevorzugt. Das Silagegutmaterial gelangt in den Zwischenraum zwischen den einzelnen Räumfingern und drückt sich danach in den Freiraum der benachbarten Förderschneckenwindung und wird damit nicht zum Ballen zurücküberführt. Dabei kommt es nicht zu einer Mehrfachkontaktierung der Räumfinger, so daß mit der Vorrichtung nach der Erfindung eine wesentlich verringerte Vermusungsgefahr einhergeht.

Bevorzugterweise sind die Räumfinger derart ausgebildet, daß sie einen geneigt ausgebildeten Kopfbereich haben, so daß sie eine in Rotationsrichtung der Förderschnecke vordere Kopfspitze haben, die im Verlaufe der Förderdrehbewegung zunächst in das Silagegut eintaucht. Durch die mögliche Abschrägung im Kopfbereich und auch eine Abschrägung in der der Förderrichtung abgewandten hinteren Fingerkante ist der jeweilige Räumfinger durch das Material zu ziehen. Dazu ist der Räumfinger auch bevorzugt in seinem oberen Kopfbereich angefast ausgebildet.

Es hat sich herausgestellt, daß ein Neigungswinkel im hinteren Stirnkantenbereich von bis zu 30° Vorteile bringt. Dieser Bereich ist daher gegen die Drehrichtung geneigt, womit eine Freiräumung begünstigt ist. Bevorzugterweise ist eine Teilung zwischen 15 und 50 Zähnen vorgesehen, eine Teilung von 28 hat sich als vorteilhaft herausgestellt. Diese Teilung bezieht sich auf einen bereichweisen Umschlingungswinkel von 360°, bezogen auf die Förderschnecke.

Weitere vorteilhafte Ausgestaltungen ergeben sich aus weiteren Unteransprüchen, der nachfolgenden Beschreibung und der Zeichnung. In der Zeichnung zeigen:
Fig.1 eine Seitenansicht eines Ausführungsbeispiels der Vorrichtung zum Entnehmen von Silagegut nach der Erfindung, wobei aus Gründen der Übersichtlichkeit diese nur im Aufnahmebereich veranschaulicht ist,
Fig. 2 eine Ansicht von vorne auf das Ausführungsbeispiel nach Fig. 1,
Fig. 3in einer perspektivischen Darstellung abgewickelt ein 360° Förderelement mit Darstellung der Räumfinger,

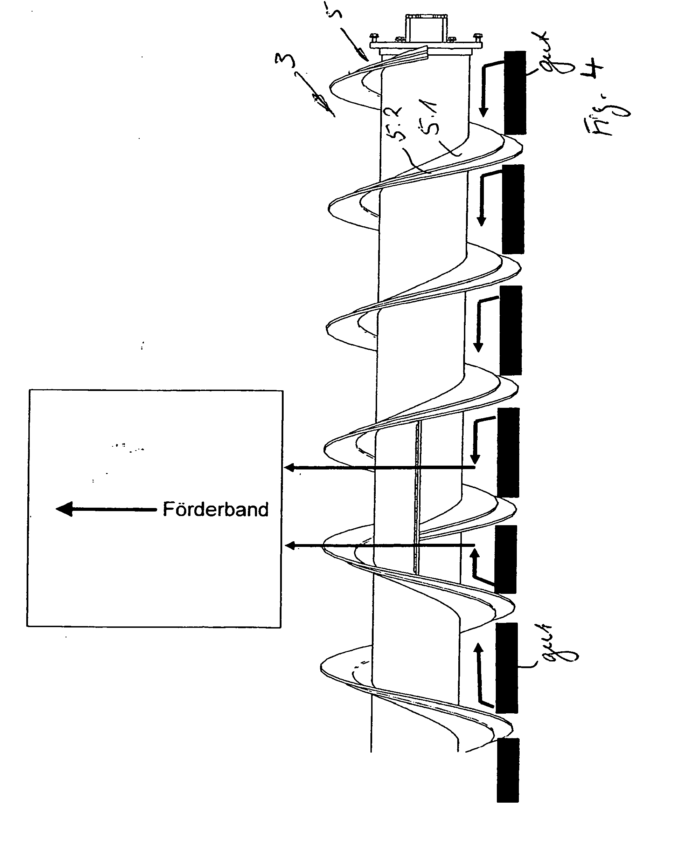

Fig. 4eine Darstellung des Materialflusses in einer Ansicht von vorne auf die Förderschnecke mit als durchgehende Linie angedeuteten Räumfinger,
Fig. 5eine zu Fig. 1 analoge Darstellung in perspektivischer Darstellung der Aufnahmevorrichtung, und
Fig. 6ausschnittsweise einen Förderrondensegmentbereich mit daran befestigten Räumfinger (vergrößert).

In der Zeichnung sind gleichwirkende Teile mit übereinstimmenden Bezugszeichen beziffert.

Die Vorrichtung insgesamt kann als selbstfahrender Futtermischwagen mit einem in Fahrtrichtung hinteren Aufnahmebehälter ausgebildet sein mit einer entsprechenden Fahrkabine, einem Fahrwerk, einem Antriebsmotor und Rädern und einem die Fahrerkabine übergreifenden Aufnahmevorrichtung 1, die über Hubzylinder 2 auf- und abbeweglich ist. Diese Aufnahmevorrichtung 1 kann in eine Transportstellung überführt werden, in der sie sich z.B. oberhalb der Fahrkabine in Fahrtrichtung erstreckt und zum Entnehmen von Silagegut auf einen Silagegutballen oder einen Flachsilo abgesenkt werden kann. Auf die Darstellung des Fahrzeuges insgesamt mit Aufnahmebehälter ist aus Gründen der besseren Übersichtlichkeit verzichtet worden.

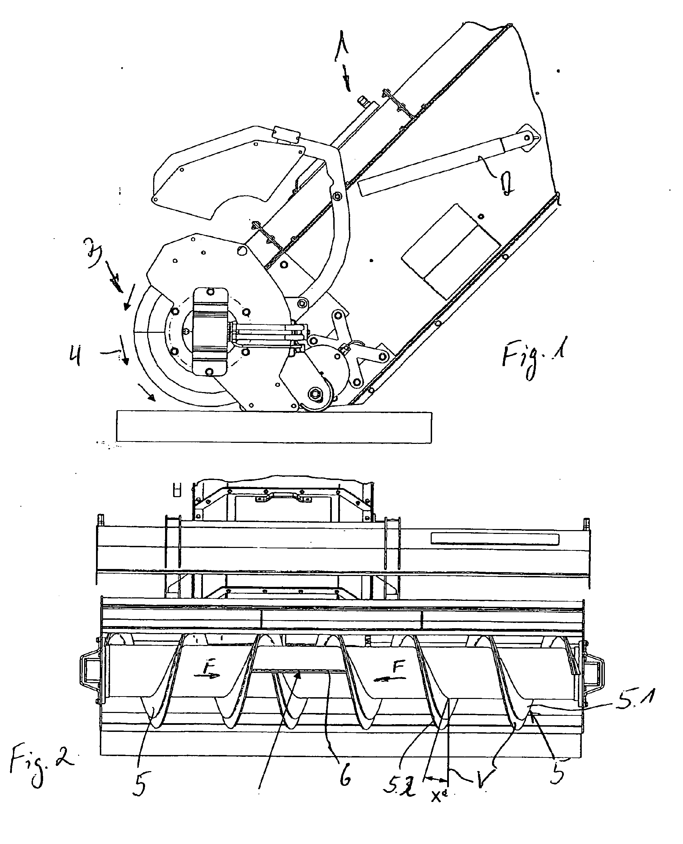

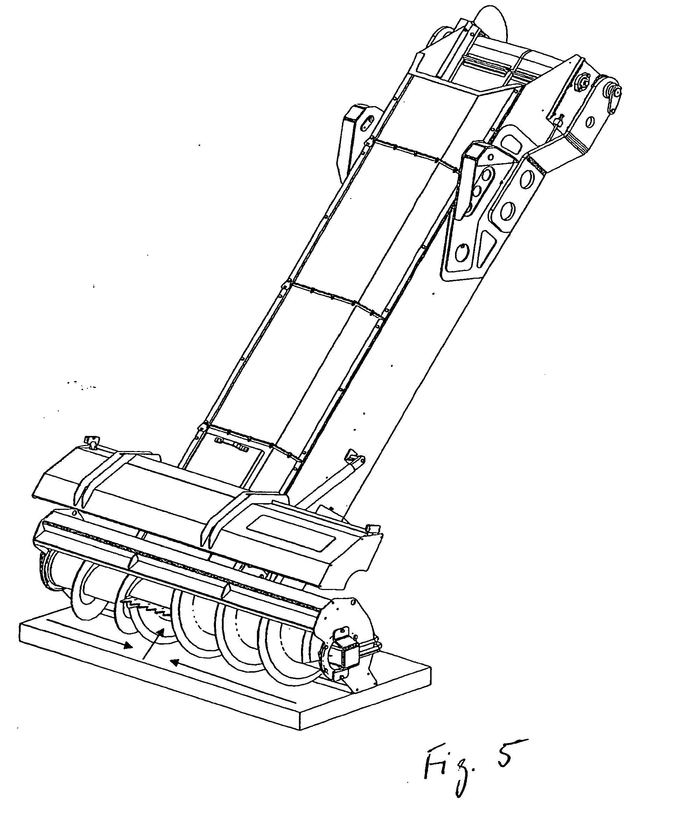

Die Aufnahmevorrichtung 1 hat insgesamt eine Förderschnecke 3, die in Richtung der Pfeile 4 (Fig. 1) während des Entnahmevorgangs rotiert. Diese Förderschnecke 3 weist Förderelemente 5 auf, die den Darstellungen nach Fig. 2 und 5 zu entnehmen ist, und hat zwei Förderabschnitte 5.1, die gegensinnig ausgebildet sind und mittleren Wurfpaddeln 6 zufördern, die das entnommene Silagegut an ein nicht näher dargestelltes Elevatorband weitergeben. Die Förderelemente 5 haben jeweils einen Fördersegmentbereich 5.1, an den sich ein (in Fig. 1, 2, 5 stilisiert dargestellt) Bereich 5.2 anschließt, der Räumfinger 5.3 aufweist. Der Fördersegmentbereich 5.1 ist genauso wie die Räumfinger 5.3 geneigt zur Vertikalen V (Fig. 2) ausgebildet, so daß er leicht schräg in Förderrichtung F (Fig. 2) verläuft.

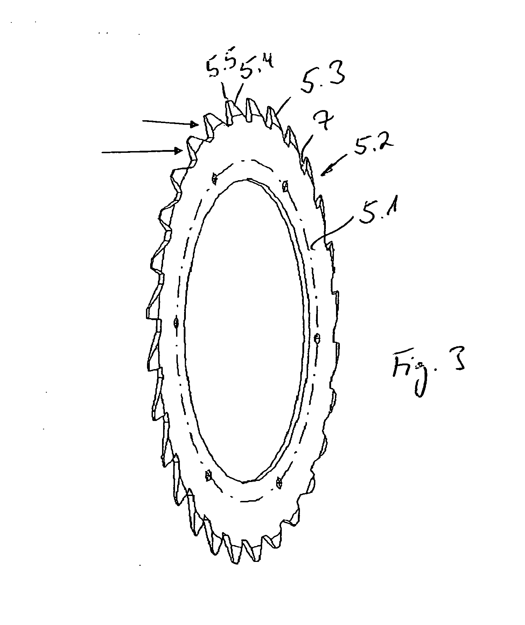

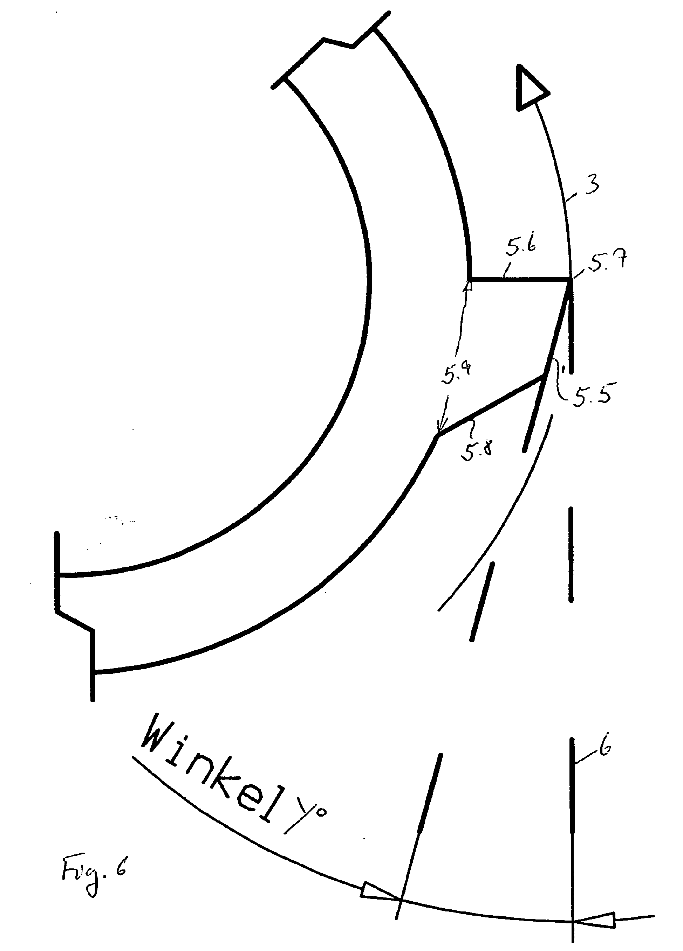

Dieser Räumfingerbereich 5.2 hat einzelne Räumfinger 5.3., die auch als abgeschrägte Räumzähne zu bezeichnen sind, wie sie näher in Fig. 3 und Fig. 6 veranschaulicht sind. Dazu ist in Fig. 3 aus Gründen der besseren Übersichtlichkeit ein abgewickeltes 360° Kreissegment dargestellt worden, was einem 360° Umschlingungsbereich der Förderschnecke 5 entspricht. Die einzelnen Räumfinger 5.3 können eine seitliche Anfasung 5.4 haben, so daß sie zu ihrem Kopf 5.5 hin schmaler werden. Ansonsten sind sie in Rotationsrichtung 3 der Förderschnecke derart ausgebildet, daß sie unter einem rechten Winkel in den Fördersegmentbereich 5.2 übergehen. Dazu ist die vordere Kante 5.6 geradlinig ausgebildet (Fig. 6). Die Räumfingerkopfkante 5.5 ist gegen die Rotationsrichtung 3 geneigt und hat daher eine vordere Spitze 5.7. Auch die hintere Kante 5.8 ist gegen die Drehrichtung geneigt, so daß die obere Räumfingerkopfkante 5.5 kleiner ausgebildet ist als der Räumfingerfußbereich 5.9, wobei die Neigung der Räumfingerkante 5.6 gegenüber der Tangente 6 (Fig.6) als Winkel Y dargestellt ist.

Wesentlicher Vorteil ist, daß die Räumfinger freiziehend in das Silagegut und durch dieses hindurch zu ziehen sind, womit bei hoher Entnahmeleistung außerordentlich schonend Silagegutmaterial aus einem Silageballen gezogen werden kann. Auch zugegebene Pelletts zum Beimischen bleiben in ihrer Form erhalten und werden nicht zerstört. Darüber hinaus hat das Fördersegment und damit die Aufnahmevorrichtung insgesamt eine ausgesprochen hohe Bruchsicherheit. Der Entnahmevorgang kann beispielsweise auch noch durch Hubbewegungen der Aufnahmevorrichtung insgesamt unterstützt werden. Dazu kann auch eine Geschwindigkeitsregelung vorgesehen sein, so daß entsprechende Absenkbewegungen abhängig von der Leistung sind.

## Patentansprüche

1. Vorrichtung (1) zum Entnehmen von Silagegut aus insbesondere einem Silo oder einem Silageballen, mit einer einem Aufnahmebehälter zugeordneten Aufnahmevorrichtung, die zumindest eine ein Förderelement (5) aufweisende Förderschnecke (3) hat, die das aufgenommene Gut zum Weitertransport in den Aufnahmebehälter einem Weiterförderer zufördert, **dadurch gekennzeichnet, dass** die Förderschnecke (3) eine als Ausräumer ausgebildete Förderronde (5) aufweist mit zumindest einem in Längsrichtung der Förderronde (5) vorgesehenen Förderrondensegmentbereich (5.1) und mit einem sich daran anschließenden Bereich (5.2), der Räumfinger (5.3) zum Eintauchen in das Silagegut aufweist, zwischen denen jeweils ein Zwischenraum (7) ausgebildet ist, wobei der Innendurchmesser der Förderschnecke (3), das ist der Mantelflächendurchmesser, 40 % bis 70 % des Außendurchmessers der Förderschnecke (3) beträgt und wobei die Räumfinger (5.3) in ihrem in Umlaufrichtung (4) hinteren Stirnkantenbereich (5.8) geneigt ausgebildet sind und ihre einen Fußbereich (5.9) gegenüberliegende Räumfingerkopfkanten (5.5) jeweils eine geringere Längserstreckung haben als ihre in den Förderrondensegmentbereich (5.1) übergehenden Fußbereiche (5.9).

2. Vorrichtung zur Entnahme von Silagegut nach Anspruch 2, **dadurch gekennzeichnet, dass** der Fördersegmentbereich (5.1) an jedem Punkt seiner Erstreckung in Längsrichtung der Förderschnecke (3) geneigt zur Vertikalen (V) ausgebildet ist.

3. Vorrichtung zur Entnahme von Silagegut nach Anspruch 2, **dadurch gekennzeichnet, dass** die Räumfinger (5.3) mit auf dem Förderrondensegmentbereich (5.1) entsprechend dessen Neigung zur Vertikalen (V) geneigt ausgebildet sind.

4. Vorrichtung zur Entnahme von Silagegut nach Anspruch 2 oder 3, **dadurch gekennzeichnet, dass** die Räumfinger (5.3) an ihrer dem aufzunehmenden Silagegut zugewandten Räumfingerkopfkante (5.5) abgeschrägt mit einem Winkel (Y) zur Tangente (6) an ihrem maximalen Kopfpunkt (5.7) ausgebildet sind.

5. Vorrichtung zur Entnahme von Silagegut nach Anspruch 1 bis 4, **dadurch gekennzeichnet, dass** die Förderschnecke (3) gegensinnig ausgebildete Förderbereiche (5) hat.

6. Vorrichtung zur Entnahme von Silagegut nach Anspruch 5, **dadurch gekennzeichnet, dass** zwischen den gegensinnig ausgebildeten Förderbereiche (5) Wurfpaddel (6) zur Übernahme des aufgenommenen Silagegutes auf ein Elevatorband als Weiterförderer vorgesehen sind.

7. Vorrichtung zur Entnahme von Silagegut nach einem der Ansprüche 2 bis 6, **dadurch gekennzeichnet, dass** der Förderrondensegmentbereich (5.1) in einem Winkel von 5° bis 15° zur Vertikalen (V) geneigt ausgebildet ist.

8. Vorrichtung zur Entnahme von Silagegut nach einem der Ansprüche 1 bis 7, **dadurch gekennzeichnet, dass** die Förderronde (5) pro 360°-Umschlingung mit einer Fingerteilung von 15 bis 35 ausgebildet ist.

9. Vorrichtung zur Entnahme von Silagegut nach einem der Ansprüche 1 bis 8, **dadurch gekennzeichnet, dass** die Räumfinger (5.3) zu ihrer jeweiligen Räumfingerkopfkante (5.6) angefast ausgebildet sind.

10. Vorrichtung zum Mitnehmen von Silagegut nach einem der Ansprüche 1 bis 9, **dadurch gekennzeichnet, dass** die Förderschnecke (3) über eine Hubvorrichtung (2) auf und abbewegbar und der Entnahmevorgang durch Auf- und Abbewegen der Förderschnecke (3) unterstützbar ist.

## Claims

1. Arrangement (1) for removing silage particularly from a silo or a silage bale, having a pick-up arrangement, associated with a receiving container, which has a conveyor screw (3) which has at least one conveying member (5) and which feeds the silage which has been picked up to an onward-feeding feeder for onward transport into the receiving container, **characterised in that** the conveyor screw (3) has a conveying flight (5) which takes the form of a withdrawing means, which conveying flight (5) has at least one sub-region (5.1) which is provided in the longitudinal direction of the conveying flight (5) and a region (5.2) adjacent thereto which has withdrawing fingers (5.3) for penetrating into the silage, between each pair of which a gap (7) is formed, the inside diameter of the conveyor screw (3), i.e. the diameter of the circumferential supporting surface, being 40% to 70% of the outside diameter of the conveyor screw (3), and the withdrawing fingers (5.3) being formed to be inclined in the region of their end-edge (5.8) which is at the rear in the direction of rotation (4), and their top edges (5.5) opposite from a root region (5.9) each being of a smaller longitudinal extent than their root regions (5.9), which latter merge into the sub-region (5.1) of the conveying flight.

2. Arrangement for removing silage according to claim 2, **characterised in that** the conveying sub-region (5.1) is formed to be inclined to the vertical (V) everywhere along its extent in the longitudinal direction of the conveyor screw (3).

3. Arrangement for removing silage according to claim 2, **characterised in that** the withdrawing fingers (5.3) are formed on the sub-region (5.1) of the conveying flight as part thereof to be at an inclination corresponding to the inclination thereof to the vertical (V).

4. Arrangement for removing silage according to claim 2 or 3, **characterised in that**, at their top edge (5.5) adjacent the silage to be picked up, the withdrawing fingers (5.3) are formed to be bevelled at an angle (Y) to a tangent (6) to the point (5.7) at which they are of a maximum height.

5. Arrangement for removing silage according to claims 1 to 4, **characterised in that** the conveyor screw (3) has conveying regions (5) of oppositely directed forms.

6. Arrangement for removing silage according to claim 5, **characterised in that** impelling paddles (6) to transfer the silage which is picked up to an elevator belt acting as an onward-feeding feeder are provided between the conveying regions (5) of oppositely directed forms.

7. Arrangement for removing silage according to one of claims 2 to 6, **characterised in that** the sub-region (5.1) of the conveying flight is formed to be inclined at an angle of 5° to 15° to the vertical (V).

8. Arrangement for removing silage according to one of claims 1 to 7, **characterised in that** the conveying flight (5) is formed to have fingers pitched at 15 to 35 per 360° circumferential loop.

9. Arrangement for removing silage according to one of claims 1 to 8, **characterised in that** the withdrawing fingers (5.3) are formed to be bevelled in the direction of their respective top edges (5.6).

10. Arrangement for entraining silage according to one of claims 1 to 9, **characterised in that** the conveying screw (3) can be moved up and down by means of a lifting arrangement (2) and the removal process can be assisted by moving the conveying screw (3) up and down.

## Revendications

1. Dispositif destiné à extraire des produits d'ensilage notamment d'un silo ou une balle d'ensilage, comprenant un dispositif de réaction comportant une trémie et ayant une vis de transfert (3) présentant au moins un élément de transfert (5) qui transfert le produit prélevé pour le transport dans le réceptacle d'un dispositif de transfert ultérieur, dispositif **caractérisé en ce que**
la vis de transfert (3) comprend un rond de transfert (5) réalisé comme organe de dégagement avec au moins une zone de segment rond de transfert (5.1) prévue dans la direction longitudinale du rond de transfert (5) et avec une zone (5.2) adjacente à celui-ci présentant des doigts de dégagement (5.3) pour s'enfoncer dans le produit d'ensilage formant entre eux à chaque fois un espace intermédiaire (7),
* le diamètre intérieur de la vis de transfert (3) qui est le diamètre de la surface d'enveloppe, correspond à 40 % à 70 % du diamètre extérieur de la vis de transfert (3), et
* les doigts de dégagement (5.3) sont réalisés, avec leur zone d'arête frontale arrière (5.8), selon le sens de rotation (4), inclinée, et leur arête de tête du doigt de dégagement (5.5) opposée à la zone de talon (5.9), présente à chaque fois une extension longitudinale inférieure à celle de la zone de talon (5.9) rejoignant la zone de rond de transfert (5.1).

2. Dispositif selon la revendication 1,
**caractérisé en ce que**
chaque point de l'extension de la zone de segment de transfert (5.1) est incliné dans la direction longitudinale de la vis de transfert (3), par rapport à la verticale (V).

3. Dispositif selon la revendication 1,
**caractérisé en ce que**
les doigts de dégagement (5.3) sont réalisés sur la zone de segment de rond de transfert (5.1) en fonction de son inclinaison par rapport à la verticale (V).

4. Dispositif selon la revendication 1 ou 2,
**caractérisé en ce que**
les doigts de dégagement (5.3) à leur arête (5.5) de tête de doigt de dégagement tournée vers le produit d'ensilage à prélever, sont inclinés avec un angle (Y) par rapport à la tangente (6) à leur sommet maximal (5.7).

5. Dispositif selon l'une des revendications 1 à 4,
**caractérisé en ce que**
la vis de transfert (3) présente des zones de transfert (5) de sens opposé.

6. Dispositif selon la revendication 5,
**caractérisé en ce qu'**
entre les zones de transfert (5) de sens opposé, on prévoit des palettes d'éjection (6) pour transférer le produit d'ensilage prélevé sur une bande d'élévateur en tant que moyen de transfert aval.

7. Dispositif selon l'une des revendications 2 à 6,
**caractérisé en ce que**
la zone de segment de rond de transfert (5.1) est inclinée d'un angle de 5° à 15° par rapport à la verticale (V).

8. Dispositif selon l'une des revendications 1 à 7,
**caractérisé en ce que**
le rond de transfert (5) est réalisé avec une répartition de doigts de 15 à 35 doigts par 360°.

9. Dispositif selon l'une des revendications 1 à 8,
**caractérisé en ce que**
les doigts de dégagement (5.3) ont un congé à leur arête de tête doigt de dégagement (5.6) correspondante.

10. Dispositif selon l'une des revendications 1 à 9,
**caractérisé en ce que**
la vis (3) peut être soulevée ou abaissée par un dispositif de levage (2) et que le processus d'extraction est facilité par le relèvement ou l'abaissement de la vis (3).
